# EUROPÄISCHE PATENTSCHRIFT

(11) **EP 3 738 419 B1**
(45) Veröffentlichungstag und Bekanntmachung des Hinweises auf die Patenterteilung: **27.04.2022**
(21) Anmeldenummer: 20172749.2
(22) Anmeldetag: 04.05.2020
(51) Int. Cl.: A01B 35/24, A01B 61/04

(54) **BODENBEARBEITUNGSGERÄT**
SOIL TILLAGE IMPLEMENT
ÉQUIPEMENT DE PRÉPARATION DU SOL

(30) Priorität: 16.05.2019 AT 1842019
(43) Veröffentlichungstag der Anmeldung: 18.11.2020
(73) Patentinhaber: Thomas Hatzenbichler Agro-Technik GmbH, 9433 St. Andrä im Lavanttal (AT)
(72) Erfinder: KOGLEK, Daniel, 9422 Maria Rojach (AT); HATZENBICHLER, Thomas, 9433 St. Andrä im Lavanttal (AT); LEOPOLD, Juergen, 9431 St. Stefan (AT)
(74) Vertreter: Beer & Partner Patentanwälte KG

(56) Entgegenhaltungen:
- EP-A1- 3 245 855
- WO-A1-2016/191825
- WO-A1-2018/191767
- DE-A1- 19 956 953
- DE-A1-102015 107 648
- US-A- 5 988 291
- US-A1- 2012 073 844
- US-A1- 2019 045 700

## Beschreibung

### Die Erfindung betrifft ein Bodenbearbeitungsgerät mit den Merkmalen des einleitenden Teils von Anspruch 1.

Derartige Geräte, die auch als Striegel bezeichnet werden, sind bekannt. Beispielsweise wird auf den im Prospekt "Hatzenbichler AUSTRIAN-AGRO-TECHNIK" gezeigten und beschriebenen "Original-Striegel" verwiesen. Dieser bekannte Striegel besitzt ein Traggestell mit mehreren Holmen, an denen Striegelzinken befestigt sind. Die Striegelzinken umfassen einen dreifach gewundenen Abschnitt, sodass die Zinken beim Bearbeiten des Bodens zum Entfernen von Unkraut aus Feldern mit Kulturpflanzen, wie Getreide, Soja, Mais, Sonnenblumen, Erdbeeren, Zuckerrüben, Raps und dgl., eingesetzt werden können.

Ein weiteres gattungsgemäßes Bodenbearbeitungsgerät ist aus EP 1 961 283 B1 bekannt. Dieses bekannte Bodenbearbeitungsgerät, das insbesondere zum Pflegen der Bodenflächen von Kulturpflanzungen bestimmt ist, besitzt ein Traggestell und mehrere, an dem Traggestell verschwenkbar angeordnete Striegelzinken. Weiters ist eine den Striegelzinken zugeordnete Verstelleinrichtung vorgesehen.

Mit Hilfe der Verstelleinrichtung kann die Vorspannung der über Federn vorgespannten Striegelzinken verstellt werden.

Problematisch bei dem aus EP 1 961 283 B1 bekannten Bodenbearbeitungsgerät ist es, dass die Striegelzinken über Schraubenfedern vorgespannt werden, was nicht nur ein erheblicher Aufwand, sondern auch störanfällig ist.

Aus DE 199 56 953 A1, US 2019/0045700 A1 und DE 10 2016 107 951 A1 sind Bodenbearbeitungsgeräte mit federnden, den Boden furchend bearbeitenden Werkzeugen bekannt.

Aus US 5,492,182 A, US 6,164,386 A, US 2012/0073844 A1 und WO 2018/191767 A1 sind gattungsgemäße Bodenbearbeitungsgeräte ("Striegel") bekannt.

WO 2018/191767 A1 zeigt ein gattungsgemäßes Bodenbearbeitungsgerät mit schwenkbaren, in Lagern gelagerten Striegelzinken, wobei die über die Lager überstehenden Enden der Striegelzinken mit Druck-Schraubenfedern gekuppelt sind. Der in WO 2018/191767 A1 erwähnte Hydraulikzylinder dient nicht dazu, die Striegelzinken zu bewegen oder federnd zu belasten, sondern einen Rahmen gegenüber dem Grundgestell zu verstellen.

Nachteilig bei diesem bekannten Bodenbearbeitungsgerät ist es, dass sich die Kraft, mit der Schraubenfedern auf die Striegelzinken einwirken, mit der Schwenklage der Striegelzinken ändert.

Der aus DE 10 2016 107 951 A1 bekannte Grubber für furchende Bodenbearbeitung, besitzt Federzinken mit wenigstens einer Federwindung. Dabei soll die Vorspannung einstellbar sein. Hierzu schlägt DE 10 2016 107 951 A1 vor, ein Auflageelement (Absatz [0020], Fig. 2a - 2d) vorzusehen. Absatz [0021] von DE 10 2016 107 951 A1 erwähnt - ohne genauere Angaben, wie das verwirklicht sein kann - die Vorspannung der Federelemente mit einem hydraulischen oder pneumatischen Aktor und/oder einem Feder- und/oder Dämpfungselement einzustellen. Auch bei der Ausführungsform des Grubbers von DE 10 2016 107 951 A1 wird die Federwirkung durch die Federwindung des Federzinkens selbst bestimmt. Ein Ausschwenken des Federzinken mit Hilfe einer schwenkbaren Lagerung offenbart DE 10 2016 107 951 A1 nicht.

Der Erfindung liegt die Aufgabe zugrunde, ein Bodenbearbeitungsgerät der eingangs genannten Gattung zur Verfügung zu stellen, bei dem die Striegelzinken in ihre Wirkstellung vorgespannt sind und - bezogen auf die Arbeitsrichtung - keine Querbewegungen (Schwingungen) in erheblichem Ausmaß ausführen.

Gelöst wird diese Aufgabe erfindungsgemäß mit einem Bodenbearbeitungsgerät, das die Merkmale von Anspruch 1 aufweist.

Bevorzugte und vorteilhafte Ausgestaltungen des erfindungsgemäßen Bodenbearbeitungsgerätes sind Gegenstand der Unteransprüche.

Bei der Erfindung ist vorgesehen, dass die die Striegelzinken in ihre Wirkstellung belastenden, vorspannenden Federn pneumatische Federn sind. Da die pneumatischen Federn über Druckregelventile mit Druckluft beaufschlagt werden, ist gewährleistet, dass die Kraft, mit der Striegelzinken belastet werden, in allen Schwenkstellungen der Striegelzinken gleich groß ist, also auch bei zunehmenden Schwenken der Striegelzinken nicht größer wird.

Da bei dem erfindungsgemäßen Bodenbearbeitungsgerät die Wirkstellung der Striegelzinken durch einen am Traggestell angeordneten Anschlag bestimmt ist und weil jeder Striegelzinke eine pneumatische Feder zugeordnet ist, die die Striegelzinke in ihre Wirkstellung vorspannt, ergibt sich nicht nur eine für die Kulturpflanzen schonende Bearbeitung, mit dem Ziel, Unkraut zu entfernen, sondern es sind auch Querbewegungen (Bewegungen der Striegelzinken quer zur Arbeitsrichtung) vollständig oder wenigstens weitgehend vermieden. In einer praktischen Ausführungsform des erfindungsgemäßen Bodenbearbeitungsgerätes sind die Striegelzinken an Hebeln befestigt, die ihrerseits am Traggestell, insbesondere an Holmen des Traggestells, verschwenkbar gelagert sind.

In einer Ausführungsform des erfindungsgemäßen Bodenbearbeitungsgerätes ist vorgesehen, dass die pneumatischen Federn einerseits an den Trägern, an welchen die Hebel mit den Zinken verschwenkbar gelagert sind, und anderseits an den Hebeln mit Abstand von den Schwenkachsen der Hebel angreifen.

Bei dem erfindungsgemäßen Bodenbearbeitungsgerät kann vorgesehen sein, dass die Holme im Traggestell verdrehbar gelagert sind, sodass die Striegelzinken aus einer Arbeitsposition (= Wirkstellung) in eine Transportposition verschwenkt werden können, wobei die Striegelzinken in der Transportposition dem Traggestell angenähert sind.

Weitere Einzelheiten und Merkmale der Erfindung ergeben sich aus der nachstehenden Beschreibung eines bevorzugten Ausführungsbeispiels des erfindungsgemäßen Bodenbearbeitungsgerätes anhand der Zeichnungen. Es zeigt:

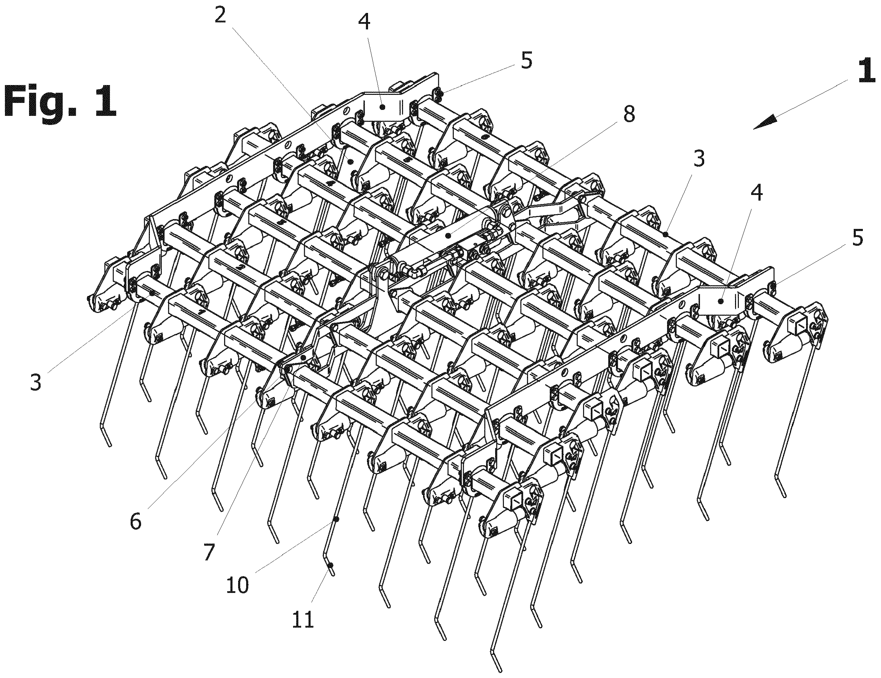

- Fig. 1: ein Bodenbearbeitungsgerät in Schrägansicht,

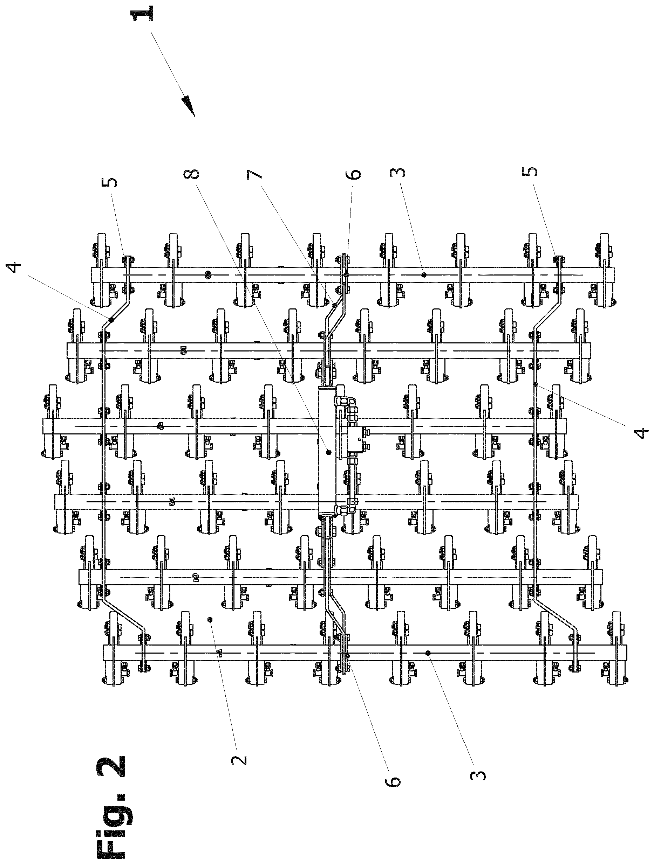

- Fig. 2: eine Draufsicht auf das Bodenbearbeitungsgerät von Fig. 1,
- Fig. 3: eine Seitenansicht des Bodenbearbeitungsgerätes von Fig. 1, wobei die Striegelzinken in Wirkstellung sind,
- Fig. 4: das Bodenbearbeitungsgerät von Fig. 1 mit in Transportposition verschwenkten Striegelzinken,
- Fig. 5: eine Einzelheit der Lagerung der Striegelzinken und der ihnen zugeordneten Feder,
- Fig. 6: in einer Ansicht ähnlich Fig. 5 die Lage der Striegelzinke, wenn diese auf ein Hindernis (Stein) aufläuft und
- Fig. 7: die von den Striegelzinken ausgeübten Zinkendrücke.

Ein erfindungsgemäßes Bodenbearbeitungsgerät 1 umfasst ein Traggestell 2, das im gezeigten Ausführungsbeispiel sechs Holme 3 aufweist. Die Holme 3 sind über im Traggestell 2 seitlich angeordnete Wangen 4 miteinander verbunden. Dabei sind die Holme 3 in den Wangen 4 in Lagern 5 verdrehbar gelagert, sodass die Holme 3 um zu ihren Längserstreckungen parallele Achsen verdreht werden können.

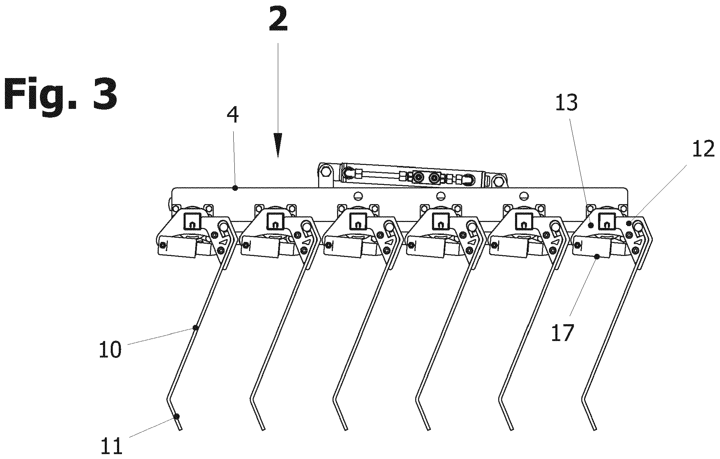

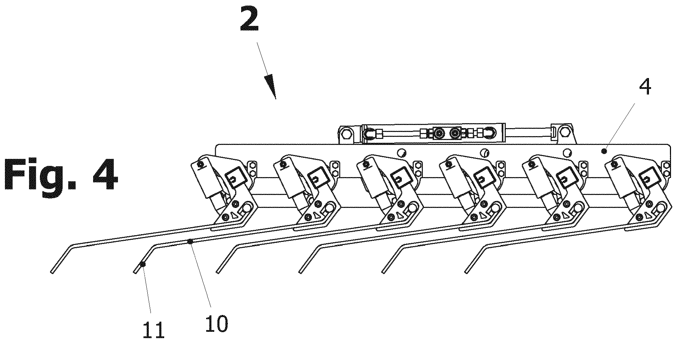

Zum Verdrehen der Holme 3 sind an ihnen Arme 6 befestigt, die miteinander über Kupplungsstangen 7 verbunden sind. Die Verbindungen der freien Enden der Arme 6 mit der Kupplungsstange 7 sind als Gelenke ausgebildet, sodass die Holme 3 durch Verstellen der Kupplungsstangen 7 mit Hilfe eines Hydraulikzylinders 8 verdreht werden können. So können die Striegelzinken 10 aus der in Fig. 3 gezeigten Wirkstellung (= Arbeitsposition) in die in Fig. 4 gezeigte Bereitschaftsstellung (= Transportposition) verschwenkt werden.

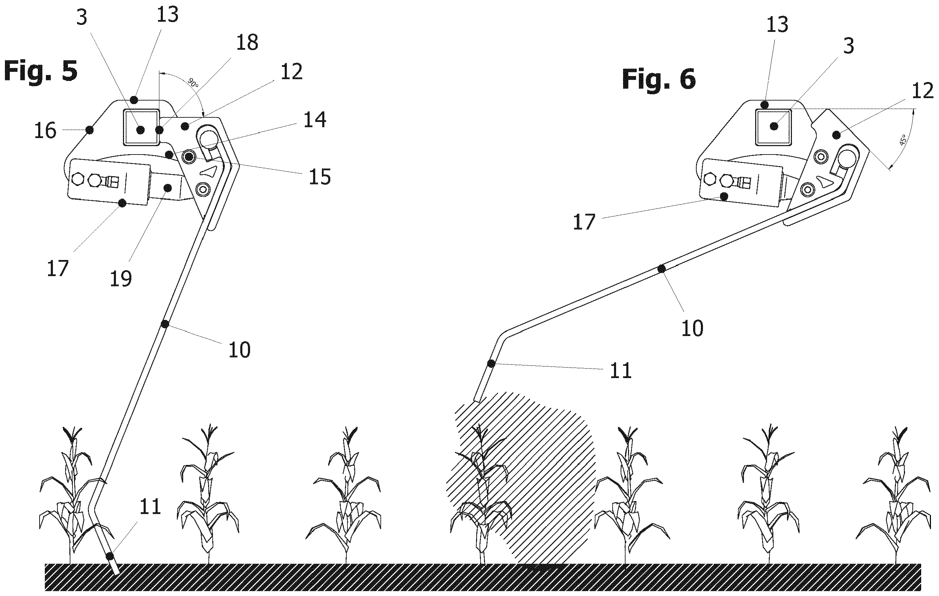

Die aus Federstahl bestehenden Striegelzinken 10 haben abgewinkelte freie Enden 11, wobei die abgewinkelten Enden 11 zur Bodenbearbeitung in den Boden eingreifen, um Unkraut zu entfernen (vgl. Fig. 5).

Die Striegelzinken 10 sind an Hebeln 12 befestigt. Die Hebel 12 sind an Trägern 13 verschwenkbar gelagert, wobei die Träger 13 an den Holmen 3 des Traggestells 2 befestigt sind. An einem Arm 14 der im Wesentlichen zweiarmig ausgebildeten Träger 13 sind die Hebel 12 über Lager 15 verschwenkbar gelagert. An dem anderen Arm 16 der Träger 13 ist ein Pneumatikzylinder 17, der als pneumatische Feder wirkt, gelenkig abgestützt. Der Kolben 19 des Pneumatikzylinders 17 ist mit dem Hebel 12, welcher die Striegelzinke 10 trägt, gelenkig verbunden. Die Stelle, an welcher der Pneumatikzylinder 17 mit dem Hebel 12 verbunden ist, besitzt Abstand vom Schwenklager 15 der Hebel 13.

Die Hebel 12 besitzen Anschlagflächen 18, die auf der Seite des Hebels 12 angeordnet sind, die der Stelle, an welcher der Kolben 19 des Pneumatikzylinders 17 am Hebel 12 angreift und dem Ende, von welchem die Striegelzinke 10 absteht, gegenüberliegt. Die Anschlagfläche 18 liegt in der in Fig. 5 gezeigten Wirkstellung der Striegelzinke 10 an einer Seitenfläche des Holmes 3, an dem die Striegelzinke 10 schwenkbar gelagert ist, an.

Durch Beaufschlagen der Pneumatikzylinder 17 wirken diese als Feder und die Striegelzinken 10 werden in ihre Wirkstellung, in der die Anschlagflächen 18 an den Holmen 3 anliegen, vorgespannt. Trotzdem können die Striegelzinken 10, insbesondere wenn sie auf ein Hindernis stoßen, wie dies in Fig. 6 gezeigt ist, unter Zusammendrücken des Pneumatikzylinders 17 verschwenken und dem Hindernis ausweichen, ohne dass die Striegelzinken 10 beschädigt werden.

Die Pneumatikzylinder 17 werden über Druckregelventile mit Druckluft beaufschlagt. So ist es möglich, den Zinkendruck an den freien Enden 11 der Striegelzinken 10 in allen Schwenklagen der Striegelzinken 10 gleich groß zu halten. Das gilt nicht nur für die in den Fig. 5 und 6 gezeigten Schwenklagen der Striegelzinken 10, sondern auch für den ganzen Schwenkbereich zwischen den in den Fig. 5 und 6 gezeigten Schwenklagen der Striegelzinken 10.

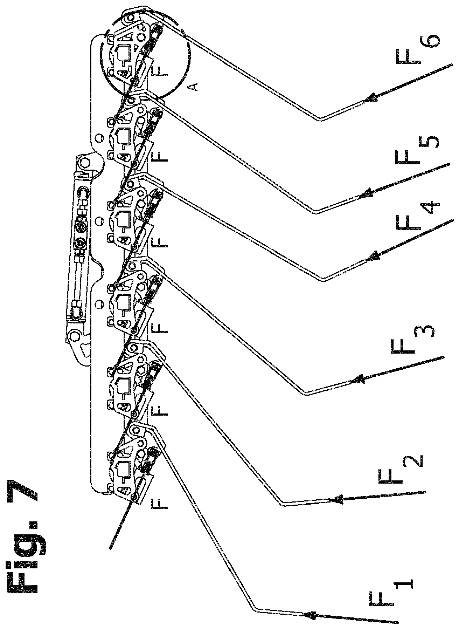

In Fig. 7 ist der von Striegelzinken 10 in verschiedenen Schwenklagen ausgeübte Zinkendruck (F₁ bis F₆) dargestellt. Es gilt bei dem erfindungsgemäßen Bodenbearbeitungsgerät 1 F₁=F₂=F₃=F₄=F₅=F₆.

Zusammenfassend kann ein Ausführungsbeispiel der Erfindung wie folgt beschrieben werden:
Bei einem Bodenbearbeitungsgerät 1 mit mehreren Striegelzinken 10 sind die Striegelzinken 10 an Hebeln 12 befestigt, die über Träger 13 an Holmen 3 des Traggestells 2 verschwenkbar gelagert sind. Durch Anliegen der Hebel 12 an Holmen 3 ist die Wirkstellung der Striegelzinken 10 definiert und die Striegelzinken 10 werden durch ihnen zugeordnete Federn in Form von Pneumatikzylindern 17 in die Wirkstellung vorgespannt.

## Patentansprüche

1. Bodenbearbeitungsgerät (1) mit einem Holme (3) umfassenden Traggestell (2), mit mehreren an dem Traggestell (2) verschwenkbar angeordneten Striegelzinken (10), wobei den Striegelzinken (10) je eine Feder zugeordnet ist, wobei die Wirkstellung der Striegelzinken (10) durch einen am Traggestell (2) angeordneten Anschlag bestimmt ist und wobei die Striegelzinken (10) durch die Federn in ihre Wirkstellung vorgespannt sind, **dadurch gekennzeichnet, dass** die Federn pneumatische Federn, insbesondere Pneumatikzylinder (17), sind und dass die pneumatischen Federn über Druckregelventile mit Druckluft beaufschlagt sind.

2. Bodenbearbeitungsgerät nach Anspruch 1, **dadurch gekennzeichnet, dass** die Striegelzinken (10) an Hebeln (12) befestigt sind und dass die Hebel (12) am Traggestell (2) verschwenkbar gelagert sind.

3. Bodenbearbeitungsgerät nach Anspruch 2, **dadurch gekennzeichnet, dass** die Hebel (12) über Träger (13) an Holmen (3) des Traggestells (2) verschwenkbar gelagert sind.

4. Bodenbearbeitungsgerät nach Anspruch 2 oder 3, **dadurch gekennzeichnet, dass** die Hebel (12) voneinander unabhängig verschwenkbar sind.

5. Bodenbearbeitungsgerät nach Anspruch 3 oder 4, **dadurch gekennzeichnet, dass** die Federn an den Trägern (13) abgestützt sind und an den Hebeln (12) mit Abstand von Lagern (15) der Hebel (12) an den Trägern (13) angreifen.

6. Bodenbearbeitungsgerät nach einem der Ansprüche 3 bis 5, **dadurch gekennzeichnet, dass** in der Wirkstellung der Striegelzinken (10) ein Ende der Hebel (12) an dem als Anschlag dienenden Holm (3) des Traggestells (2), an dem auch der Träger (13) befestigt ist, anliegt.

7. Bodenbearbeitungsgerät nach einem der Ansprüche 1 bis 6, **dadurch gekennzeichnet, dass** die Holme (3), an denen die Striegelzinken (10) angeordnet sind, im Traggestell (2) verdrehbar gelagert sind.

8. Bodenbearbeitungsgerät nach Anspruch 7, **dadurch gekennzeichnet, dass** die Holme (3) in seitlichen Wangen (4) des Traggestells (2) verdrehbar gelagert sind.

9. Bodenbearbeitungsgerät nach Anspruch 7 oder 8, **dadurch gekennzeichnet, dass** an den Holmen (3) Arme (6) befestigt sind, dass die freien Enden der Arme (6) miteinander über eine Kupplungsstange (7) verbunden sind und dass zum Betätigen der Kupplungsstange (7) ein Linearmotor, vorzugsweise ein Hydraulikzylinder (8), der im Traggestell (2) abgestützt ist, vorgesehen ist.

## Claims

1. Soil tillage implement (1) having a supporting frame (2) comprising spars (3), having a plurality of harrow tines (10) pivotably arranged on the supporting frame (2), wherein a spring is associated with each of the harrow tines (10), wherein the operative position of the harrow tines (10) is determined by a stop arranged on the supporting frame (2), and wherein the harrow tines (10) are pretensioned into their operative position by the springs, **characterized in that** the springs are pneumatic springs, in particular pneumatic cylinders (17), and **in that** the pneumatic springs are acted upon by compressed air via pressure-regulating valves.

2. Soil tillage implement according to claim 1, **characterized in that** the harrow tines (10) are attached to levers (12), and **in that** the levers (12) are pivotably mounted on the supporting frame (2).

3. Soil tillage implement according to claim 2, **characterized in that** the levers (12) are pivotably mounted via supports (13) on spars (3) of the supporting frame (2).

4. Soil tillage implement according to claim 2 or 3, **characterized in that** the levers (12) can be pivoted independently of one another.

5. Soil tillage implement according to claim 3 or 4, **characterized in that** the springs are supported on the supports (13) and engage on the levers (12) at a distance from bearings (15) of the levers (12) on the supports (13).

6. Soil tillage implement according to one of the claims 3 to 5, **characterized in that** in the operative position of the harrow tines (10), one end of the levers (12) rests against the spar (3), serving as a stop, of the supporting frame (2) to which the support (13) is also fastened.

7. Soil tillage implement according to one of the claims 1 to 6, **characterized in that** the spars (3), on which the harrow tines (10) are arranged, are rotatably mounted in the supporting frame (2).

8. Soil tillage implement according to claim 7, **characterized in that** the spars (3) are rotatably mounted in lateral cheeks (4) of the supporting frame (2).

9. Soil tillage implement according to claim 7 or 8, **characterized in that** arms (6) are attached to the spars (3), **in that** the free ends of the arms (6) are connected to each other via a coupling rod (7), and **in that** for actuating the coupling rod (7) a linear motor, preferably a hydraulic cylinder (8) supported in the supporting frame (2), is provided.

## Revendications

1. Instrument de travail du sol (1) avec un châssis porteur (2) comprenant des longerons (3), avec plusieurs dents de herse (10) disposées de façon pivotante sur le châssis porteur (2), chacune des dents de herse (10) étant associée à un ressort, dans lequel la position active des dents de herse (10) est déterminée par une butée disposée sur le châssis porteur (2) et dans lequel les dents de herse (10) sont précontraintes par les ressorts dans leur position active, **caractérisé en ce que** les ressorts sont des ressorts pneumatiques, en particulier des vérins pneumatiques (17), et **en ce que** les ressorts pneumatiques reçoivent de l'air comprimé passant par des soupapes de régulation de la pression.

2. Instrument de travail du sol selon la revendication 1, **caractérisé en ce que** les dents de herse (10) sont fixées à des leviers (12) et **en ce que** les leviers (12) sont supportés de façon pivotante sur le châssis porteur (2).

3. Instrument de travail du sol selon la revendication 2, **caractérisé en ce que** les leviers (12) sont supportés de façon pivotante par des supports (13) sur des longerons (3) du châssis porteur (2).

4. Instrument de travail du sol selon la revendication 2 ou 3, **caractérisé en ce que** les leviers (12) peuvent pivoter indépendamment les uns des autres.

5. Instrument de travail du sol selon la revendication 3 ou 4, **caractérisé en ce que** les ressorts s'appuient sur les supports (13) et se mettent prise sur les leviers (12) à distance de pivots (15) des leviers (12) sur les supports (13).

6. Instrument de travail du sol selon l'une des revendications 3 à 5, **caractérisé en ce que**, dans la position active des dents de herse (10), une extrémité des leviers (12) repose sur le longeron (3) du châssis porteur (2) servant de butée sur lequel le support (13) est également fixé.

7. Instrument de travail du sol selon l'une des revendications 1 à 6, **caractérisé en ce que** les longerons (3) sur lesquels les dents de herse (10) sont disposées sont supportés avec possibilité de rotation dans le châssis porteur (2).

8. Instrument de travail du sol selon la revendication 7, **caractérisé en ce que** les longerons (3) sont supportés avec possibilité de rotation dans des flasques latéraux (4) du châssis porteur (2).

9. Instrument de travail du sol selon la revendication 7 ou 8, **caractérisé en ce que** des bras (6) sont fixés sur les longerons (3), **en ce que** les extrémités libres des bras (6) sont reliées les unes aux autres par une tringle de couplage (7) et **en ce qu'**un moteur linéaire est prévu pour actionner la tringle de couplage (7), de préférence un vérin hydraulique (8) qui s'appuie dans le châssis porteur (2).
